# EUROPÄISCHE PATENTSCHRIFT

(11) **EP 0 473 007 B1**
(45) Veröffentlichungstag und Bekanntmachung des Hinweises auf die Patenterteilung: **13.11.1996**
(21) Anmeldenummer: 91113627.3
(22) Anmeldetag: 14.08.1991
(51) Int. Cl.: C22C 37/00, F16D 65/10, F16D 65/12

(54) **Bremskörper**
Brake component
Organe de freinage

(30) Priorität: 23.08.1990 DE 4026611
(43) Veröffentlichungstag der Anmeldung: 04.03.1992
(73) Patentinhaber: Fritz Winter, Eisengiesserei O.H.G., D-35260 Stadtallendorf (DE)
(72) Erfinder: Lampic-Opländer, Milan, Dr., W-3550 Marburg/Lahn (DE); Meurer, Horst, Dr., W-3575 Kirchhain 1 (DE); Jahn, Hannes, W-3570 Stadtallendorf 1 (DE)
(74) Vertreter: Werner, Dietrich H., Dr.-Ing.

(56) Entgegenhaltungen:
- FR-A- 1 584 096
- WORLD PATENTS INDEX, Sektion CH, Klasse M, Seite 27, AN=77-33656, Derwent Publications Ltd, London, GB, & PATENT ABSTRACTS OF JAPAN (C-77)[1535]; & JP-A-52 041 115 (MITSUBISHI JUKOGYO K.K.) 30-03-1977
- WORLD PATENTS INDEX LATEST, Sektion CH, AN=84-311627, Derwent2Publications Ltd, London, GB; & SU-A-1090 751 (CHITOV et al.; BIELORUSSKI ORDENA TRUDOVOGO KRASNOGO ZNAMENI POLYTECHNICHESKI INSTITUT) 07.05.1984
- WORLD PATENTS INDEX LATEST, Sektion CH, AN=85-011328, Derwent Publications Ltd, London, GB; & SU-A-1097 703 (KARPENKO et al.; VSESOJUZNI ZAOTCHNI POLYTECHNICHESKI INSTITUT) 15-06-1984
- PATENT ABSTRACTS OF JAPAN, Band 3, Nr. 43 (C-42), 13. April 1979; & JP-A-54 016 323 (KUBOTA TEKKO K.K.) 02-06-1979

## Beschreibung

Die Erfindung betrifft einen Bremskörper aus hochgekohltem perlitischem Gußeisen mit Lamellengraphit. Unter dem Begriff "Bremskörper" werden Bremstrommeln und massive oder innenbelüftete Bremsscheiben zusammengefaßt.

"Hochgekohlt" ist ein Gußeisen mit über 3,6 % C. An hochbeanspruchte Bremskörper gestellte Anforderungen sind in der Reihenfolge ihrer Bedeutung:
1.) hohe Wärmeleitfähigkeit,
2.) hohe Thermoschock- und Temperaturwechselbeständigeit,
3.) hohe Verschleißfestigkeit bei gleichmäßigem Abtrag,
4.) hoher Reibwert, der eine große Bremsverzögerung bewirkt und
5.) gute Zugfestigkeit.

Besitzt ein Bremskörper diese Eigenschaften nicht alle in ausreichendem Maße, kann ein Versagen infolge sogenannter Hitzerisse, Ratterns, zu langen Bremsweges und/oder Abreißen des Befestigungsflansches auftreten. Hitzerisse sind eine Folge schlechter Wärmeleitfähigkeit und damit zusammenhängend schlechter Thermoschock- und Temperaturwechselbeständigkeit. Rattern tritt ein, wenn die Anforderung unter 3.) nicht erfüllt wird. Zu geringer Reibwert (Anforderung unter 4.) führt zu geringer Bremsverzögerung und einem dementsprechend langen Bremsweg. Hat das Bremskörper-Material keine genügende Zugfestigkeit, kann der Befestigungsflansch oder Topf abreißen.

Die Anforderungen unter 1.) bis 3.) versucht man durch eine möglichst große Menge an Lamellengraphit im Gefüge des Gußeisens zu verwirklichen. Üblicherweise enthält das Gußeisen dazu hohe Kohlenstoff- und Siliziumgehalte.

Mit steigender Graphitmenge sinkt aber die Zugfestigkeit, die mit durchschnittlich 150 N/mm² häufig unbefriedigend ist. Selbst bei Wärmeleitfähigkeiten zwischen 50 und 60 W/m K konnte eine hohe Temperaturwechselbeständigkeit und Verschleißfestigkeit nicht hinreichend reproduzierbar erreicht werden.

Das Verschleißverhalten der Bremskörper hängt wesentlich von der Gleichmäßigkeit des Gußgefüges ab. Führende Phase im Verlauf der eutektischen Kristallisation ist der Graphit. Danach erstarren Graphit und Austenit eine Zeit lang gemeinsam und zum Schluß wird eutektischer Austenit allein ausgeschieden. Der zeitliche und mengenmäßige Umfang der einzelnen Kristallisationsphasen hängt stark von kinetischen Faktoren, wie heterogener Keimbildungskatalyse sowie Abkühlungsgeschwindigkeit, ab und kann von Fall zu Fall auch lokal im Gußstück stark schwanken. Dies kann z. B. dazu führen, daß sich das Gefüge in der Umgebung von Angüssen stark vom übrigen Gefüge unterscheidet, woraus dann ein ungleichmäßiger Verschleiß resultiert.

Nach Untersuchungen der Fahrzeugindustrie ist metallseitig der Reibwert in erster Linie eine Funktion der Härte und des Graphitgehalts. Bei einer gegebenen Härte nimmt der Reibwert mit steigender Zähigkeit der Matrix zu.

Es bereitet große Schwierigkeiten, ein Material zu finden, das dem gesamten vorgenannten Anforderungskatalog in zufriedenstellender Weise erfüllt. Der Erfindung liegt somit die Aufgabe zugrunde, Bremskörper aus dem gattungsgemäßen Material herzustellen, welches die Kombination der vorstehend unter 1.) bis 5.) genannten Eigenschaften in optimaler Weise besitzt. Dabei stehen neben guter Zugfestigkeit insbesondere hervorragende Temperaturwechselbeständigkeit und Verschleißfestigkeit im Vordergrund.

Zur Lösung dieser Aufgabe wird eine Zusammensetzung des Bremskörper nach Anspruch 1 vorgeschlagen. Bevorzügte Ausführungsformen der Erfindung sind den Ansprüchen 2-4 zu entnehmen. Das Gußeinsen enthält 0,03 bis 0,09 % Zirkonium und/oder Yttrium. Diese Maßnahme ermöglicht eine Erhöhung der Wärmeleitfähigkeit auf 60 W/m K und höher sowie eine Steigerung der Temperaturwechselbeständigkeit um über 50 % von bisher 1000 auf 1500 bis 1700 Zyklen, gemessen auf dem Schwungmassen-Prüfstand des Instituts für Förder- und Getriebetechnik an der TU Berlin und auch der Verschleißfestigkeit als die wesentlichen Voraussetzungen für die Verbesserung des Bremskörpers bei Zugfestigkeitswerten, die gesichert über der bisherigen Höchstgrenze liegen. Die Brucharbeit im Zugversuch wird von 10 bis 15 J/cm², die normales hochgekohltes Gußeisen aufweist, auf 20 bis 25 J/cm² gesteigert.

Zur Verringerung des Abriebs um 30 bis 60 % und zur Steigerung der Zugfestigkeit um den Faktor 1,2 enthält das Gußeisen 0,002 bis 0,009 % Bor und/oder 0,03 bis 0,06 % Lanthan.

Zwecks weiterer Steigerung der Zugfestigkeit um den Faktor 1,3 bis 1,4 und einer weiteren Steigerung der Brucharbeit auf 30 bis 40 J/cm² wird erfindungsgemäß vorgeschlagen, das Gußeisen mit 0,2 bis 0,8 % Molybdän und Zinn im Verhältnis Mo : Sn = 2 : 1 bis 5 : 1 zu legieren.

Mit der erwähnten Steigerung der Temperaturwechselbeständigkeit im Schwungmassenversuch, der auf 180 N/mm² und darüber gesteigerten Zugfestigkeit sowie einer Wärmeleitfähigkeit von größer als 60 W/m K, sehr guter Verschleißfestigkeit und hohem Reibwert erreicht der erfindungsgemäße Bremskörper eine Eigenschaftskombination, wie sie von herkömmlichen Gußeisenlegierungen unbekannt war.

Versuche mit Bremskörpern aus einer Gußeisenlegierung mit
3,7 bis 3,8 % C
1,7 bis 1,9 % Si
0,5 bis 0,6 % Mn
max. 0,15 % S
max. 0,10 % P
0,3 bis 0,4 % Cu
0,04 bis 0,05 % Zr
0,004 bis 0,005 % B
Rest Eisen
erwiesen sich bei Fahrversuchen gegenüber herkömmlichen Bremskörpern als erheblich besser.

## Patentansprüche

1. Bremskörper aus hochgekohltem Gußeisen mit Lamellengraphit,
**dadurch gekennzeichnet**, daß das Gußeisen 0,03 bis 0,09 % Zirkonium und/oder Yttrium, und 0,002 bis 0,009 % Bor und/oder 0,03 bis 0,06 % Lanthan, enthält.

2. Bremskörper nach Anspruch 1,
**dadurch gekennzeichnet**, daß das Gußeisen 0,002 bis 0,009 % Bor enthält.

3. Bremskörper nach Anspruch 1 oder 2,
**dadurch gekennzeichnet**, daß das Gußeisen zusätzlich 0,2 bis 0,8 % insgesamt an Molybdän und Zinn im Verhältnis Mo : Sn = 2 : 1 bis 5 : 1 enthält.

4. Bremskörper nach einem der Ansprüche 1 bis 3,
**dadurch gekennzeichnet**, daß er eine Zugfestigkeit über 180 N/mm² und eine Wärmeleitfähigkeit von mehr als 60 W/m · K besitzt.

## Claims

1. A brake component of highly carburization cast iron containing lamellar graphite characterized in that the cast iron contains 0.03 to 0.09% zirconium and/or yttrium, 0.002 to 0.009% boron and/or 0.03 to 0.06% lanthanum.

2. A brake component according to claim 1, characterized in that the cast iron contains 0.002 to 0.009% boron.

3. A brake component according to claims 1 or 2, characterized in that the cast iron also contains a total of 0.2 to 0.8% molybdenum and tin in the ratio Mo : Sn = 2 : 1 to 5 : 1.

4. A brake component according to one of claims 1 to 3, characterized in that it has a tensile strength above 180 N/mm² and a thermal conductivity of more than 60 Wm · K.

## Revendications

1. Corps de freinage réalisé en fonte de fer carburé à graphite lamellaire, caractérisé en ce que la fonte de fer contient 0,03 à 0,09% de zirconium et/ou d'yttrium, et 0,002 à 0,009% de bore et/ou 0,03 à 0,06% de lanthane.

2. Corps de freinage selon la revendication 1, caractérisé en ce que le fer de fonte contient 0,002 à 0,009% de bore.

3. Corps de freinage selon la revendication 1 ou 2, caractérisé en ce que le fer de fonte contient en supplément en tout 0,2 à 0,8% de molybdène et d'étain dans un rapport Mo : Sn = 2 : 1 à 5 : 1.

4. Corps de freinage selon l'une quelconque des revendications 1 à 3, caractérisé en ce qu'il possède une résistance à la dilatation supérieure à 180 N/mm² et une conductivité thermique supérieure à 60 W/m.K.
